# EUROPÄISCHE PATENTSCHRIFT

(11) **EP 3 018 462 B1**
(45) Veröffentlichungstag und Bekanntmachung des Hinweises auf die Patenterteilung: **28.12.2016**
(21) Anmeldenummer: 15190665.8
(22) Anmeldetag: 20.10.2015
(51) Int. Cl.: G01K 1/14, E01C 19/08, G01K 13/10, B60P 1/00, B60P 3/00, B60P 1/28

(54) **TEMPERATURMESSVORRICHTUNG UND TRANSPORTFAHRZEUGMULDE**
TEMPERATURE MEASURING DEVICE AND TRANSPORT VEHICLE SKIP
SONDE DE TEMPERATURE ET BENNE DE VEHICULE DE TRANSPORT

(30) Priorität: 23.10.2014 DE 102014221560
(43) Veröffentlichungstag der Anmeldung: 11.05.2016
(73) Patentinhaber: MOBA Mobile Automation AG, 65555 Limburg (DE)
(72) Erfinder: Becher, Dominik, 65555 Limburg (DE); Watermann, Marcus, 65555 Limburg (DE)
(74) Vertreter: Zimmermann, Tankred Klaus

(56) Entgegenhaltungen:
- AT-B- 399 777
- CN-U- 203 657 924
- DE-U1- 9 205 442
- DE-U1-202014 009 511
- JP-A- 2006 051 887

## Beschreibung

Die vorliegende Erfindung bezieht sich auf das Gebiet von Transportfahrzeugmulden, insbesondere betrifft die Erfindung eine Temperaturmessvorrichtung mit einem in einer Halterung angeordneten Temperatursensor zur Bestimmung der Temperatur eines innerhalb einer Mulde eines Transportfahrzeugs befindlichen Baumaterials, insbesondere eines Straßenbaumaterials wie Asphalt, Bitumen, Asphaltmischgut oder dergleichen, wobei die Mulde eine Innenwand und eine Außenwand aufweist und die Halterung an der zur Muldenaußenwand gerichteten Seite der Muldeninnenwand angeordnet ist.

Ferner betrifft die Erfindung eine Transportfahrzeugmulde zum Transportieren von Baumaterial, insbesondere von Straßenbaumaterial wie Asphalt, Bitumen, Asphaltmischgut oder dergleichen.

Beim Transport von heißen Straßenbaumaterialien, wie beispielsweise heißem Asphalt oder Asphaltmischgut, vom Mischwerk zum Einbauort kühlt das in der Mulde eines Transportfahrzeugs befindliche Material üblicherweise ab. Bei langen Transportwegen oder hohen Standzeiten des Transportfahrzeugs am Einbauort führt dies dazu, dass das Material zum Zeitpunkt des Entladens bzw. der Übergabe an einen Straßenfertiger oder einen Beschicker bereits zu stark abgekühlt ist, was eine verminderte Qualität des erstellten Straßenbelags zur Folge hat.

Um derartige Abkühlungen des Materials auf dem Transportweg zu minimieren, sind ab dem Jahr 2015 bei Transportfahrzeugen für heiße Straßenbaumaterialien, wie beispielsweise heißem Asphalt oder Asphaltmischgut, spezielle thermoisolierte Transportmulden vorgeschrieben. Ebenso ist eine am Transportfahrzeug angebrachte Temperaturmesseinrichtung vorgeschrieben, welche während des Transportweges durch mehrere an den Seitenwänden sowie am Boden der Transportmulde angebrachte Temperatursensoren kontinuierlich Messwerte aufnimmt und protokolliert.

Beispielsweise offenbaren die Patentschriften JP-2006051887-A und DE-9205442-U1 Transportfahrzeugmulden mit am Boden der Mulde angebrachten Temperatursensoren.

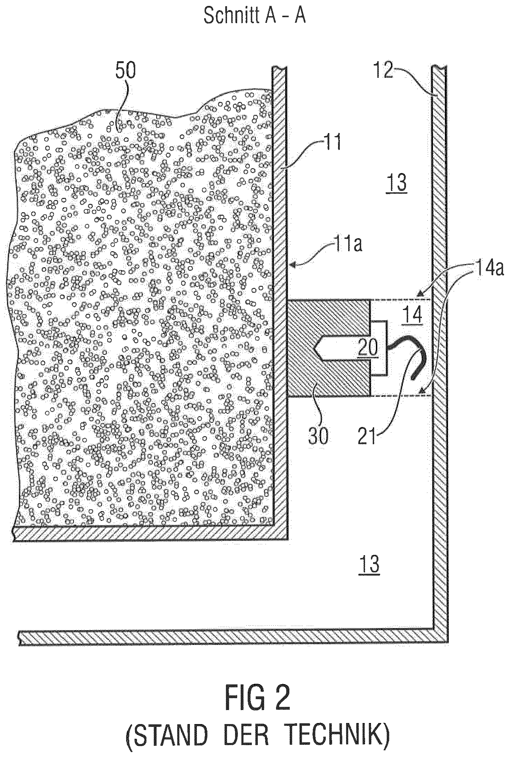

Eine thermoisolierte Transportmulde besteht dabei aus einer Innen- und einer Außenwand, mit dazwischen befindlichem Isoliermaterial. Für eine Befestigung eines Temperatursensors ist es wie in Fig. 2 dargestellt bekannt, an der zur Außenwand 12 gerichteten Seite 11a der Muldeninnenwand 11 eine Halterung 30 anzuschweißen, in welche der Temperatursensor 20 beispielsweise eingeschraubt wird. Der Temperatursensor 20 erfasst so über die Halterung 30 die Temperatur des an der Muldeninnenwand 11 anliegenden Baumaterials 50. Zwischen der Muldeninnenwand 11 und der Muldenaußenwand 12 befindet sich überwiegend Isoliermaterial 13, wobei sich im Bereich zwischen der Halterung 30 bzw. des Temperatursensors 20 und der Muldenaußenwand 12, schematisch dargestellt durch die Begrenzungslinien 14a, ein Hohlraum 14 befindet, d. h. ein Bereich ohne Isoliermaterial 13.

Nachteilig an dieser Anordnung ist, dass über die große Fläche der Muldeninnenwand sehr viel Wärme abgeführt wird, d. h. die Muldenwand die Wirkung eines Kühlkörpers entfaltet. Durch tragende Elemente, wie beispielsweise Stahl- oder Aluminiumträger, welche aus Stabilitätsgründen in der Muldenwand, d. h. zwischen Innen- und Außenwand, angeordnet sind, wird die Wärmeabfuhr durch die Muldenwand weiter verstärkt. Da die Temperaturmesseinrichtung in unmittelbarem thermischen Kontakt mit der Muldeninnenwand steht, beeinflusst die Wärmeabfuhr die Temperaturmessung, was im Ergebnis zu erheblichen Messwertabweichungen bei der Temperaturmessung führt. Auch erfolgt aufgrund der großen Fläche der Muldeninnenwand ein sehr langsamer Temperaturanstieg am Temperatursensor, sodass sich erst nach einiger Zeit ein stabiler Messwert einstellt.

Ferner bietet die große Fläche der Muldenwand einen Angriffspunkt für Umwelteinflüsse, wie beispielsweise Regen, Wind oder Sonne, welche die Wärmeabfuhr durch die Muldenwand und in der Folge daraus die Messungen des Temperatursensors beeinflussen. Auch der offene und ungeschützte Bereich, d. h. der Hohlraum zwischen der Halterung bzw. des Temperatursensors und der Außenwand der Mulde, wirkt sich negativ auf die Messungen des Temperatursensors aus. Denn Messungen während des Transports von Baumaterial in der Mulde haben gezeigt, dass sich Erwärmungen bzw. Abkühlungen der Muldenaußenwand durch die genannten Umwelteinflüsse in den Messwerten des Temperatursensors wiederspiegeln.

Weiterhin haben Messversuche an verschiedenen Muldenaufbauten gezeigt, dass es sowohl durch die unterschiedlichen Materialien wie beispielsweise Aluminium oder Stahl, aus denen die Muldenwand hergestellt wird, und die dadurch bedingten thermischen Übergangswiderstände als auch durch die unterschiedlichen Muldentypen, wie beispielsweise Kantmulden oder Kastenmulden, zu erheblichen Unterschieden der gemessenen Temperaturwerte kommt.

Ferner ist es von Nachteil, dass im Zuge von Reparaturen an der Mulde, beispielsweise bedingt durch Abnutzungen bzw. Verschleiß an der Muldeninnenwand, einzelne Stahl- oder Aluminiumplatten flächig aufgeschweißt werden. Durch eine derartige "Aufdoppelung" entstehen Luftspalte zwischen der neu aufgeschweißten Platte und der ursprünglichen Muldenwand, wodurch im Bereich des Temperatursensors eine thermische Isolation entsteht. Dies führt im Ergebnis ebenfalls zu erheblichen Messwertabweichungen.

Aufgabe der Erfindung ist es daher, eine Temperaturmessvorrichtung für eine Mulde anzugeben, mittels welcher die genannten Nachteile der bekannten Messvorrichtung umgangen werden.

Diese Aufgabe wird gemäß den Merkmalen der unabhängigen Ansprüche gelöst. Bevorzugte Ausführungen der Erfindung sind Bestandteil von abhängigen Ansprüchen.

Gemäß Ausführungsbeispielen wird eine Temperaturmessvorrichtung bereitgestellt, die einen in einer Halterung angeordneten Temperatursensor zur Bestimmung der Temperatur eines innerhalb einer Mulde eines Transportfahrzeugs befindlichen Baumaterials umfasst, wobei die Mulde eine Innenwand und eine Außenwand aufweist und die Halterung an der zur Muldenaußenwand gerichteten Seite der Muldeninnenwand angeordnet ist, wobei die Halterung thermisch isoliert gegenüber der Muldeninnenwand in einer Aussparung in der Muldeninnenwand angeordnet ist, und wobei die Halterung derart in der Aussparung angeordnet ist, dass ein dem Inneren der Mulde zugewandter Bereich der Halterung freiliegt.

Gemäß Ausführungsbeispielen ist die Halterung derart in der Aussparung angeordnet, dass der freiliegende Bereich der Halterung bei befüllter Mulde in unmittelbarem thermischen Kontakt mit dem Baumaterial steht.

Gemäß Ausführungsbeispielen weist die Halterung eine Ummantelung auf, die zwischen der Muldeninnenwand und der Halterung angeordnet ist und die Halterung und den Temperatursensor gegenüber der Muldeninnenwand thermisch isoliert.

Gemäß Ausführungsbeispielen korrespondiert die Ummantelung zu der Halterung.

Gemäß Ausführungsbeispielen ist die Halterung im Wesentlichen bündig mit der Innenfläche der Muldeninnenwand angeordnet.

Gemäß Ausführungsbeispielen wird die obige Aufgabe durch eine Temperaturmessvorrichtung gelöst, bei der die Halterung eine korrespondierende Ummantelung aufweist, welche die Halterung und den Temperatursensor gegenüber der Muldeninnenwand thermisch isoliert, und indem die Muldeninnenwand eine Aussparung aufweist, durch welche die Halterung und die Ummantelung hindurchragen, sodass die Halterung in unmittelbarem thermischen Kontakt mit dem Baumaterial steht.

In vorteilhafter Weise steht die erfindungsgemäße Temperaturmessvorrichtung nicht mehr in unmittelbarem thermischem Kontakt mit der Muldenwand, sodass der Einfluss der Muldenwand, d. h. deren Wärmeabfuhr, die Temperaturmessung nicht beeinflusst. Dementsprechend verbessert sich auch das Ansprechverhalten des Temperatursensors, d. h. ein Temperaturanstieg am Temperatursensor erfolgt nach dem Befüllen der Mulde nun erheblich schneller, sodass sich bereits nach kurzer Zeit ein stabiler Messwert einstellt. Vorteilhaft daran ist auch, dass die erfindungsgemäße Temperaturmessvorrichtung unabhängig vom Muldenaufbau ist, d. h. einerseits unabhängig vom Material, aus dem, die Muldenwand hergestellt wird, und andererseits unabhängig von den unterschiedlichen Muldentypen, wie beispielsweise Kantmulden oder Kastenmulden, da die Messvorrichtung thermisch von der Muldenwand abgekoppelt ist.

Ferner wirken sich Umwelteinflüsse, wie beispielsweise Regen, Wind oder Sonne, welche die Wärmeabfuhr durch die Muldenwand beeinflussen, durch den isolierten Aufbau der erfindungsgemäßen Temperaturmessvorrichtung in vorteilhafter Weise nicht mehr bzw. nur sehr gering auf die Messungen des Temperatursensors aus.

Gemäß Ausführungsbeispielen weist die Halterung eine korrespondierende, in ihrem Querschnitt U-förmige, Ummantelung auf, welche die Halterung und den Temperatursensor gegenüber der Muldeninnenwand und der Muldenaußenwand thermisch isoliert. Ferner weist die Muldeninnenwand eine Aussparung auf, durch welche die Halterung und die Ummantelung hindurchragen, sodass die Halterung in unmittelbarem thermischen Kontakt mit dem Baumaterial steht. In vorteilhafter Weise wird dadurch die erfindungsgemäße Temperaturmessvorrichtung, d. h. insbesondere der Temperatursensor, nicht mehr von einwirkenden Umwelteinflüssen wie beispielsweise Regen, Wind oder Sonne, an der Muldenaußenwand beeinflusst. Demgemäß spiegeln sich Erwärmungen bzw. Abkühlungen der Muldenaußenwand, wie sie von den genannten Umwelteinflüssen hervorgerufen werden, nicht mehr bzw. kaum noch im gemessenen Temperaturwert wieder.

Erfindungsgemäß weist die Ummantelung an der zur Muldenaußenwand gerichteten Seite einen Verschluss auf, mittels welchem sich die Ummantelung zur Befestigung des Temperatursensors öffnen lässt.

Erfindungsgemäß weist die Vorrichtung an der zur Muldenaußenwand gerichteten Seite eine Kabeldurchführung auf, durch welche ein Anschlusskabel für einen elektrischen Anschluss des Temperatursensors geführt ist.

Erfindungsgemäß weist der Verschluss ein Außengewinde und die Ummantelung im Bereich der mit dem Verschluss in Kontakt stehenden Fläche ein Innengewinde auf, und der Verschluss und die Ummantelung sind im montierten Zustand miteinander verschraubt.

Erfindungsgemäß ist der Temperatursensor im Bereich des elektrischen Anschlusses mittels einer thermisch und elektrisch isolierend wirkenden Vergussmasse vergossen. Dazu wird in vorteilhafter Weise eine Vergussmasse mit einer hohen Temperaturbeständigkeit, wie beispielsweise eine Vergussmasse auf Silikonkautschukbasis, verwendet.

Erfindungsgemäß ist um die Ummantelung der Halterung zur Befestigung der Temperaturmessvorrichtung an der Muldeninnenwand eine weitere, aus Aluminium, Stahl oder dergleichen bestehende und zur Ummantelung der Halterung und des Temperatursensors korrespondierende, vorzugsweise hülsenförmige Montageummantelung angeordnet, wobei die Montageummantelung in Richtung zur Muldenaußenwand offen ist. Vorteilhaft daran ist, dass die Temperaturmessvorrichtung dadurch in einfacher und kostengünstiger Weise an der Muldeninnenwand befestigt werden kann.

Erfindungsgemäß weisen die Ummantelung der Halterung ein Außengewinde und die Montageummantelung ein Innengewinde auf und sind im montierten Zustand miteinander verschraubt. In vorteilhafter Weise kann bei der Herstellung der Mulde zunächst die Montageummantelung an der Muldeninnenwand befestigt werden. Die verbleibenden Komponenten der Temperaturmessvorrichtung können dann in einem späteren Arbeitsgang in einfacher Weise in die Montageummantelung eingeschraubt und entsprechend justiert werden.

Vorteilhaft daran ist auch, dass im Falle einer beispielsweise verschleißbedingten Reparatur an der Mulde, bei welcher einzelne Stahl- oder Aluminiumplatten flächig aufgeschweißt werden, es durch die Verstellmöglichkeiten bzw. die Justage der verbleibenden Komponenten der Temperaturmessvorrichtung, d. h. der Halterung mit dem darin angeordneten Temperatursensor, zu keiner thermischen Isolation und in der Folge daraus zu keinen Messwertabweichungen kommt.

Erfindungsgemäß ist die Vorrichtung mittels der Montageummantelung an der Mulde, insbesondere an der zur Muldenaußenwand gerichteten Seite der Muldeninnenwand, befestigt, vorzugsweise daran angeschweißt, angeschraubt, angeklebt, angenietet oder dergleichen.

Erfindungsgemäß weist die Fläche, über welche das Baumaterial mit der Halterung in thermischem Kontakt steht, eine runde, rechteckige oder quadratische Form auf.

Erfindungsgemäß besteht die Halterung aus Metall, vorzugsweise aus Aluminium, einer Aluminiumlegierung, Stahl oder dergleichen. In vorteilhafter Weise wird hier ein Material mit sehr geringem Wärmeübergangswiderstand gewählt.

Erfindungsgemäß besteht die korrespondierende Ummantelung der Halterung aus Kunststoff, beispielsweise aus PTFE oder dergleichen.

Erfindungsgemäß ist der Temperatursensor in die Halterung eingeschraubt, eingeklebt, eingepresst oder eingeklemmt.

Die vorliegende Erfindung schafft auch eine Transportfahrzeugmulde zum Transportieren von Baumaterial, insbesondere von Straßenbaumaterial wie Asphalt, Bitumen, Asphaltmischgut oder dergleichen, mit der erfindungsgemäßen Temperaturmessvorrichtung.

Ausführungsbeispiele der vorliegenden Erfindung werden nachfolgend unter Bezugnahme auf die beiliegenden Zeichnungen näher erläutert. Es zeigen:
- Fig. 1: eine schematisch Darstellung einer mit Baumaterial befüllten Mulde eines Transportfahrzeugs;
- Fig. 2: eine Schnittdarstellung der in Fig. 1 dargestellten Mulde mit einer aus dem Stand der Technik bekannten Temperaturmessvorrichtung;
- Fig. 3: eine Schnittdarstellung der in Fig. 1 dargestellten Mulde mit einer erfindungsgemäßen Temperaturmessvorrichtung;
- Fig. 4a: eine wie in Fig. 3 dargestellte erfindungsgemäße Temperaturmessvorrichtung mit einer geänderten Ummantelung der Halterung;
- Fig. 4b: eine wie in Fig. 4a dargestellte erfindungsgemäße Temperaturmessvorrichtung mit einer in Richtung der Außenwand geänderten Ummantelung der Halterung;
- Fig. 5: eine Ausführungsform, bei der die Halterung durch einen isolierenden Ring ausgeführt ist; und
- Fig. 6: Ausführungsformen, bei denen die Halterung in der Aussparung bezüglich der Muldeninnenwand zurückgesetzt (Fig. 6(a)) oder in den Innenraum hineinragend (Fig. 6(b)) angeordnet ist.

In der nachfolgenden Beschreibung der Ausführungsbeispiele werden in den beiliegenden Zeichnungen gleiche oder gleichwirkende Elemente mit den gleichen Bezugszeichen versehen. Die nachfolgende Erläuterung erfolgt basierend auf einer Mulde eines Transportfahrzeugs, vorzugsweise zum Transport von Straßenbaumaterial, es sei jedoch darauf hingewiesen, dass das erfindungsgemäße Prinzip auf beliebige Ausformungen von Transportmulden, wie beispielweise sogenannte Muldenkipper oder dergleichen, sowie auf Mulden oder Behälter zum Transport von anderen Materialien anwendbar ist.

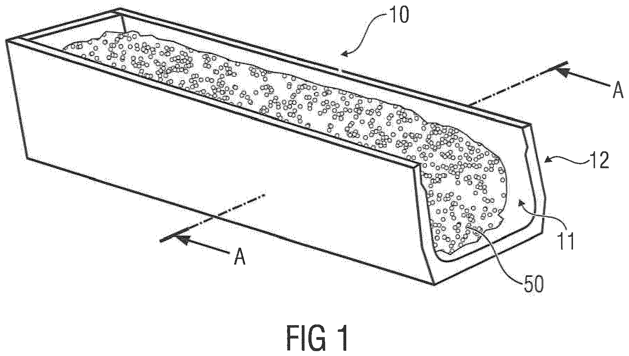

In Fig. 1 ist schematisch eine mit Baumaterial 50 befüllte Mulde 10 eines Transportfahrzeugs dargestellt. Die Mulde 10, beispielsweise eine thermoisolierte Mulde, besteht dabei im Wesentlichen aus einer Innenwand 11 und einer Außenwand 12, wobei die Mulde 10 an ihrem hinteren Ende offen ist, um das Baumaterial 50 abladen zu können. Zwischen der Muldeninnenwand 11 und der Muldenaußenwand 12 befindet sich bei einer thermoisolierten Mulde 10 Isoliermaterial 13 und aus Stabilitätsgründen tragende Elemente, wie beispielsweise Stahl- oder Aluminiumträger (hier nicht dargestellt).

Fig. 2 zeigt die in Fig. 1 dargestellte Mulde 10 in einer Schnittdarstellung entlang der Linie A-A, mit einer aus dem Stand der Technik bekannten Temperaturmessvorrichtung. Die Temperaturmessvorrichtung besteht dabei aus einer an der Außenseite 11a, d. h. an einer zur Außenwand 12 gerichteten Seite 11a der Muldeninnenwand 11 angeordneten Halterung 30, in welche ein Temperatursensor 20 beispielsweise eingeschraubt ist. Zwischen der Muldeninnenwand 11 und der Muldenaußenwand 12 befindet sich überwiegend Isoliermaterial 13, wobei sich im Bereich zwischen der Halterung 30 bzw. des Temperatursensors 20 und der Muldenaußenwand 12, schematisch dargestellt durch die Begrenzungslinien 14a, ein Hohlraum 14 befindet, d. h. ein Bereich ohne Isoliermaterial 13. Die Halterung 30 besteht üblicherweise aus Aluminium, einer Aluminiumlegierung oder aus Stahl oder dergleichen, und ist beispielsweise an der Außenseite 11a der Muldeninnenwand 11 angeschweißt. Der Temperatursensor 20 erfasst über die Halterung 30 die Temperatur des an der Muldeninnenwand 11 anliegenden Baumaterials 50, da das Baumaterial 50 über die Muldeninnenwand 11 und die Halterung 30 thermisch mit dem Temperatursensor 20 verbunden ist. Die gemessenen Temperaturwerte können über ein am Temperatursensor 20 angeordnetes Anschlusskabel 21 ausgelesen bzw. weiterverarbeitet werden.

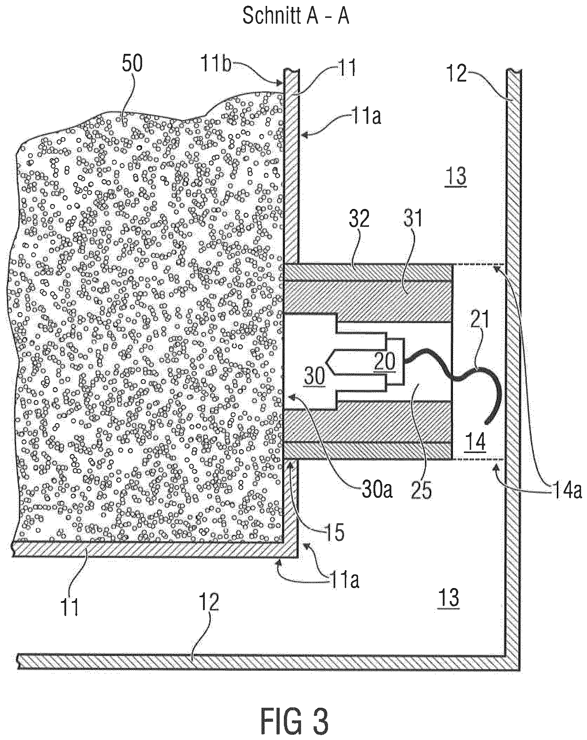

Fig. 3 zeigt die in Fig. 1 dargestellte Mulde 10 in einer Schnittdarstellung entlang der Linie A-A, jedoch im Vergleich zu Fig. 2 nun mit einer ersten Ausführungsform der erfindungsgemäßen Temperaturmessvorrichtung. Die Temperaturmessvorrichtung besteht dabei aus einer Halterung 30, welche aus einem Material mit niedrigem Wärmeübergangswiderstand wie beispielsweise Aluminium, einer Aluminiumlegierung oder aus Stahl oder dergleichen besteht. Zum Baumaterial 50 hin weist die Halterung 30 eine Kontaktfläche 30a mit einer runden, rechteckigen oder quadratischen Form auf, über welche das Baumaterial 50 mit der Halterung 30 in thermischem Kontakt steht.

Weiterhin weist die Halterung 30 eine aus Kunststoff bestehende und korrespondierende, d. h. an die Außenform der Halterung 30 angepasste, Ummantelung 31 auf, welche die Halterung 30 gegenüber der Muldeninnenwand 11 thermisch isoliert. Die Ummantelung 31 ist dabei in Richtung der Muldenaußenwand 12 und zum Baumaterial 50 hin offen. Um die Ummantelung 31 ist eine weitere, vorzugsweise aus Aluminium oder Stahl bestehende und zur Ummantelung 31 korrespondierende, hülsenförmige Montageummantelung 32 zur Befestigung der Temperaturmessvorrichtung an der Muldeninnenwand 11 angeordnet. Dabei kann die Ummantelung 31 ein Außengewinde und die Montageummantelung 32 ein Innengewinde aufweisen (hier nicht dargestellt), sodass die beiden Ummantelungen 31 und 32 im montierten Zustand miteinander verschraubt sind. Die Muldeninnenwand 11 weist weiterhin eine Aussparung 15 auf, durch welche die Halterung 30 und die Ummantelungen 31 und 32 hindurchragen, sodass die Halterung 30 und auch die Ummantelungen 31 und 32 in unmittelbarem Kontakt mit dem in der Mulde 10 befindlichen Baumaterial 50 stehen.

In die Halterung 30 ist ein Temperatursensor 20 beispielsweise eingeschraubt, welcher die Temperatur des Baumaterials 50 misst, da das Baumaterial 50 über die Fläche 30a und die Halterung 30 thermisch mit dem Temperatursensor 20 verbunden ist. Die gemessenen Temperaturwerte können über ein am Temperatursensor 20 angeordnetes Anschlusskabel 21 ausgelesen bzw. weiterverarbeitet werden. Zum Schutz des elektrischen Anschlusses 21 am Temperatursensor 20 vor beispielsweise eindringender Feuchtigkeit, ist der Anschlussbereich des Temperatursensors 20 mittels einer temperaturbeständigen und isolierenden Vergussmasse 25, wie beispielsweise eine Vergussmasse auf Silikonkautschukbasis, vergossen.

Zwischen der Muldeninnenwand 11 und der Muldenaußenwand 12 befindet sich vergleichbar zu Figur 2 ebenfalls Isoliermaterial 13, wobei sich im Bereich zwischen der erfindungsgemäßen Temperaturmessvorrichtung und der Muldenaußenwand 12, schematisch dargestellt durch die Begrenzungslinien 14a, ein Hohlraum 14 befindet, d. h. ein Bereich ohne Isoliermaterial 13.

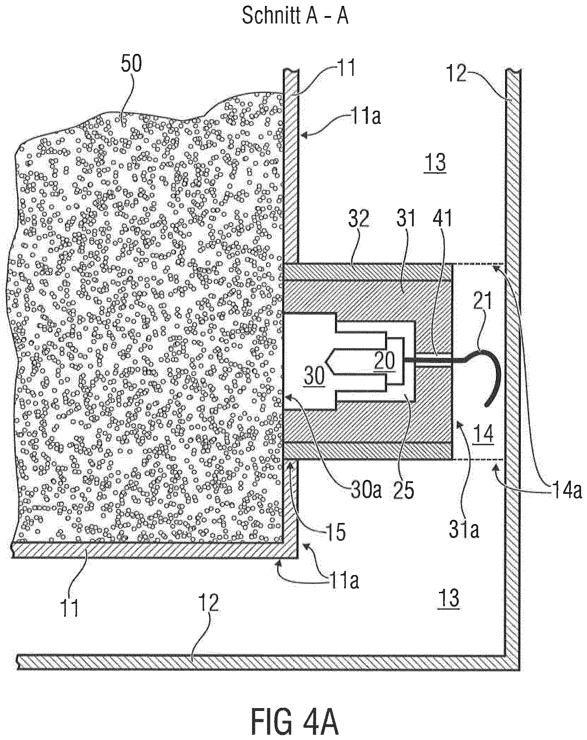

Fig. 4a zeigt eine wie in Fig. 3 dargestellte erfindungsgemäße Temperaturmessvorrichtung in einer zweiten Ausführungsform. Die Ummantelung 31 ist dabei nur in Richtung zum Baumaterial 50 hin offen, in Richtung der Muldeninnenwand 11 und -außenwand 12 ist die Ummantelung 31 im Wesentlichen geschlossen, sodass diese die Halterung 30 und den Temperatursensor 20 sowohl gegenüber der Muldeninnenwand 11 als auch gegenüber der Muldenaußenwand 12 thermisch isoliert. Dazu weist die Ummantelung 31 eine in ihrem Querschnitt U-förmige Form auf. An der zur Muldenaußenwand 12 gerichteten Seite 31a weist die Ummantelung 31 eine Kabeldurchführung 41 auf, durch welche ein Anschlusskabel 21 für einen elektrischen Anschluss des Temperatursensors 20 geführt ist.

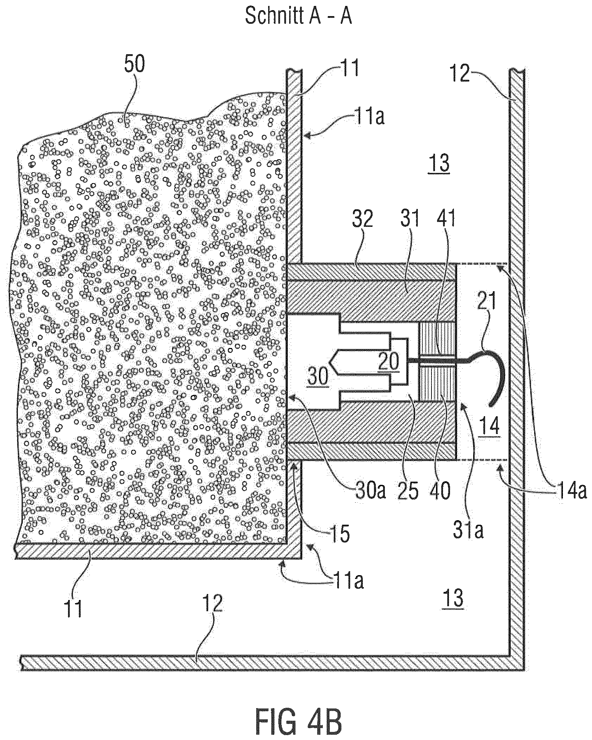

Fig. 4b zeigt eine wie in Fig. 4a dargestellte erfindungsgemäße Temperaturmessvorrichtung mit einer in Richtung der Muldenaußenwand 12 geänderten Ummantelung 31. Die Ummantelung 31 ist ebenfalls nur in Richtung zum Baumaterial 50 hin offen, in Richtung der Muldeninnenwand 11 und -außenwand 12 ist die Ummantelung 31 im Wesentlichen geschlossen, sodass diese die Halterung 30 und den Temperatursensor 20 sowohl gegenüber der Muldeninnenwand 11 als auch gegenüber der Muldenaußenwand 12 thermisch isoliert. Im Vergleich zu Figur 4a weist die Ummantelung 31 an der zur Muldenaußenwand 12 gerichteten Seite 31 a einen Verschluss 40 aufweist, mittels welchem sich die Ummantelung 31 zur Befestigung des Temperatursensors 20 öffnen lässt. Beispielsweise kann der Verschluss 40 auch ein Außengewinde und die Ummantelung 31 im Bereich der mit dem Verschluss 40 in Kontakt stehenden Fläche ein Innengewinde aufweisen, sodass der Verschluss 40 und die Ummantelung 31 im montierten Zustand miteinander verschraubt werden können.

Ferner weist der Verschluss eine an der zur Muldenaußenwand 12 gerichteten Seite 31 a eine Kabeldurchführung 41 auf, durch welche ein Anschlusskabel 21 für einen elektrischen Anschluss des Temperatursensors 20 geführt ist.

Bei allen Darstellungen der Temperaturmessvorrichtung ist zu beachten, dass diese sowohl in den Seitenwänden, der Stirn- oder Rückwand als auch im Boden der Mulde 10 angeordnet sein können.

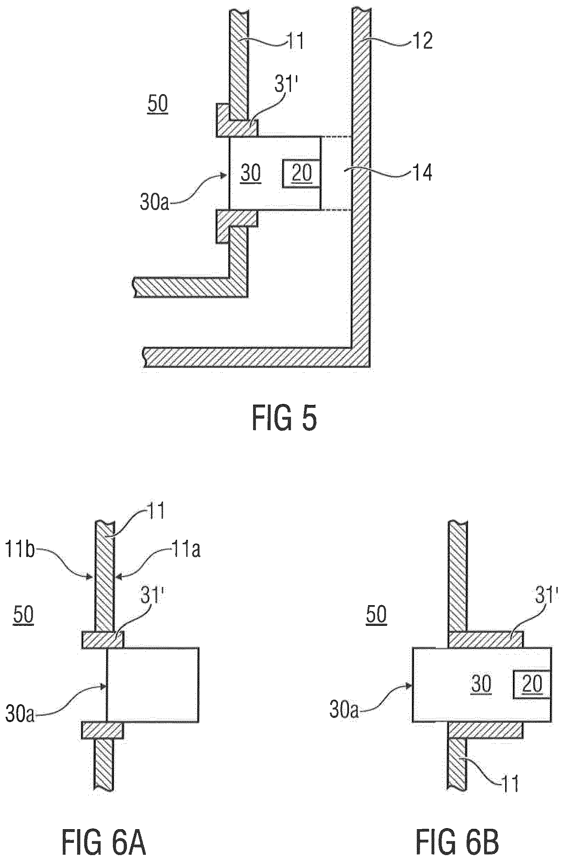

Die oben beschriebenen Ausführungsbeispiele beschreiben eine Temperaturmessvorrichtung mit einer der Halterung korrespondierenden Ummantelung, d.h. mit einer Ummantelung, die an die Außenform der Halterung angepasst ist und die die Halterung gegenüber der Muldeninnenwand thermisch isoliert. Die vorliegende Erfindung ist nicht auf solche Ausgestaltungen beschränkt. Anstelle der oben beschriebenen Ummantelungen können auch andere isolierende Bauteile vorgesehen sein, die zwischen der Halterung und der Muldeninnenwand angeordnet sind. Fig. 5 zeigt eine alternative Ausführungsform, bei der die Halterung 30 durch einen isolierenden Ring 31' ausgeführt ist, so dass zumindest die Abschnitte der Halterung 30, die in Kontakt mit der Muldeninnenwand 11 sind, gegenüber der Muldeninnenwand 11 isoliert sind. Der isolierende Ring 31' kann so ausgestaltet sein, dass er nur in der Aussparung angeordnet ist. Alternative kann sich der Ring 31', wie in Fig. 5 gezeigt ist, über die Aussparung hinaus in Richtung des Muldeninneren und/oder des Muldenäußeren erstrecken. Gemäß weiteren Ausführungsbeispielen kann der Ring 31' so ausgestaltet sein, dass er sich von der Innenfläche der Aussparung auf die zur Außenwand 12 gerichtete Seite 11a (Außenwand) der Muldeninnenwand 11 und/oder auf die die Innenwand 11 der Muldeninnenwand 11 erstreckt (siehe Fig. 5).

Die oben beschriebenen Ausführungsbeispiele beschreiben eine Temperaturmessvorrichtung, deren Halterung im Wesentlichen bündig mit der Innenfläche 11 b der Muldeninnenwand 11 angeordnet ist. Vorzugsweise schließt der freiliegende Bereich 30a der Halterung 30 bündig mit der Innenseite 11 b der Muldeninnenwand 11 ab. Die bündige Anordnung der Halterung 30 ist vorteilhaft, da vermieden wird, dass Asphalt-Materialreste beim Abladen an der hervorstehenden Halterung oder in dem Bereich, in dem die Halterung zurückgesetzt ist, hängen bleibt. Solche zurückbleibenden oder anhaftenden Materialreste können zu einer Einschränkung der Empfindlichkeit des Sensors führen und damit zu einer ungenaueren oder langsameren Temperaturerfassung. Steht die Halterung in den Muldeninnenraum hervor, kann ferner eine erhöhter Verschleiß im Bereich der freiliegenden Fläche auftreten, was durch eine bündige Anordnung reduziert wird. Weiterhin ist eine nach innen abstehende Sensorvorrichtung bei Mulden, welche das Material zum Entladen abschieben (die Mulde wird nicht gekippt), nachteilhaft, da der verwendete Schieber bei solchen Mulden bündig mit der Muldeninnenwand ausgebildet ist.

Die vorliegende Erfindung ist nicht auf Ausgestaltungen beschränkt, bei der die Halterung bündig mit der Innenfläche 11 b der Muldeninnenwand 11 angeordnet ist. Grundsätzlich kann die Halterung auch anders angeordnet sein, z.B. wenn sichergestellt wird, dass zurückgebliebenes Material von der Halterung entfernt wird und/oder wenn die Mulde keinen Schieber zum Entladen aufweist. Fig. 6 zeigt alternative Ausführungsformen, bei denen die Halterung 30 in der Aussparung bezüglich der Muldeninnenwand 11 zurückgesetzt (siehe Fig. 6(a)) oder in den Innenraum hineinragend (siehe Fig. 6(b)) angeordnet ist.

Gemäß einem weiteren Ausführungsbeispiel ist die Temperaturmessvorrichtung verstellbar angeordnet, so dass eine Position der Halterung 30 bzw. des freiliegende Bereichs 30a der Halterung 30 bezüglich der Innenseite 11 b der Muldeninnenwand 11 eingestellt werden kann. Dies ermöglicht es z.B. die bündige Anordnung auch dann beizubehalten, durch ein entsprechendes Nachstellen, wenn die Muldeninnenwand an der Montageposition des Sensors ausgebessert werden muss, z.B. durch Anbringen (z.B. Anschweißen) einer Metallplatte. In diesem Fall kann durch entsprechendes Nachstellen der Position die bündige Anordnung mit der ausgebesserten Innenwand sichergestellt werden. Die Verstellung kann durch Verwendung der oben beschriebenen Gewinde erfolgen.

Die oben beschriebenen Ausführungsbeispiele beschreiben eine Temperaturmessvorrichtung, deren Halterung mit einem Abstand von der Muldenaußenwand angeordnet ist. Die vorliegende Erfindung ist nicht auf solche Ausgestaltungen beschränkt, vielmehr kann die Halterung und/oder die Ummantelung so ausgestaltet sind, dass diese an die Außenwand angrenzen, so dass der oben erwähnte Hohlraum 14 ausgefüllt ist.

### Bezugszeichenliste

- 10: Mulde
- 11: Muldeninnenwand
- 11a: Außenseite (Außenwand) der Muldeninnenwand
- 11b: Innenseite (Innenwand) der Muldeninnenwand
- 12: Muldenaußenwand
- 13: Isoliermaterial
- 14: Hohlraum
- 14a: Hohlraumbegrenzungen
- 15: Aussparung
- 20: Temperatursensor
- 21: Anschlusskabel
- 25: Vergussmasse
- 30: Halterung
- 30a: Kontaktfläche
- 31, 31': Ummantelung der Halterung
- 31a: Rückseite der Ummantelung
- 32: Montageummantelung
- 40: Verschluss der Ummantelung
- 41: Kabeldurchführung
- 50: Baumaterial

## Patentansprüche

1. Transportfahrzeugmulde (10) zum Transportieren von Baumaterial (50), mit:
einer Temperaturmessvorrichtung, mit einem in einer Halterung (30) angeordneten Temperatursensor (20) zur Bestimmung der Temperatur eines innerhalb der Transportfahrzeugmulde (10) befindlichen Baumaterials (50), wobei die Transportfahrzeugmulde (10) eine Innenwand (11) und eine Außenwand (12) aufweist und die Halterung (30) an der zur Muldenaußenwand (12) gerichteten Seite (11a) der Muldeninnenwand (11) angeordnet ist,
wobei
die Halterung (30) thermisch isoliert gegenüber der Muldeninnenwand (11) in einer Aussparung (15) in der Muldeninnenwand (11) angeordnet ist, und
die Halterung (30) derart in der Aussparung (15) angeordnet ist, dass ein dem Inneren der Transportfahrzeugmulde (10) zugewandter Bereich (30a) der Halterung (30) freiliegt.

2. Transportfahrzeugmulde (10) nach Anspruch 1, **dadurch gekennzeichnet, dass** die Halterung (30) derart in der Aussparung (15) angeordnet ist, dass der freiliegende Bereich (30a) der Halterung (30) bei befüllter Transportfahrzeugmulde (10) (10) in unmittelbarem thermischen Kontakt mit dem Baumaterial (50) steht.

3. Transportfahrzeugmulde (10) nach Anspruch 1 oder 2, **dadurch gekennzeichnet, dass** die Halterung (30) eine Ummantelung (31) aufweist, die zwischen der Muldeninnenwand (11) und der Halterung (30) angeordnet ist und die Halterung (30) und den Temperatursensor (20) gegenüber der Muldeninnenwand (11) thermisch isoliert.

4. Transportfahrzeugmulde (10) nach einem der vorhergehenden Ansprüche, **dadurch gekennzeichnet, dass** die Ummantelung (31) zu der Halterung (30) korrespondieret.

5. Transportfahrzeugmulde (10) nach einem der vorhergehenden Ansprüche, **dadurch gekennzeichnet, dass** die Halterung (30) im Wesentlichen bündig mit der Innenfläche (11 b) der Muldeninnenwand (11) angeordnet ist.

6. Transportfahrzeugmulde (10) nach einem der vorhergehenden Ansprüche, **dadurch gekennzeichnet, dass** die Ummantelung (31) in ihrem Querschnitt U-förmig ist.

7. Transportfahrzeugmulde (10) nach Anspruch 6, **dadurch gekennzeichnet, dass** die Ummantelung (31) an der zur Muldenaußenwand (12) gerichteten Seite (31 a) einen Verschluss (40) aufweist, mittels welchem sich die Ummantelung (31) zur Befestigung des Temperatursensors (20) öffnen lässt.

8. Transportfahrzeugmulde (10) nach Anspruch 7, **dadurch gekennzeichnet, dass** der Verschluss (40) ein Außengewinde und die Ummantelung (31) im Bereich der mit dem Verschluss (40) in Kontakt stehenden Fläche ein Innengewinde aufweisen, und der Verschluss (40) und die Ummantelung (31) im montierten Zustand miteinander verschraubt sind.

9. Transportfahrzeugmulde (10) nach einem der vorhergehenden Ansprüche, **dadurch gekennzeichnet, dass** die Temperaturmessvorrichtung an der zur Muldenaußenwand (12) gerichteten Seite (31 a) eine Kabeldurchführung (41) aufweist, durch welche ein Anschlusskabel (21) für einen elektrischen Anschluss des Temperatursensors (20) geführt ist.

10. Transportfahrzeugmulde (10) nach einem der vorhergehenden Ansprüche, **dadurch gekennzeichnet, dass** der Temperatursensor (20) im Bereich des elektrischen Anschlusses mittels einer thermisch und elektrisch isolierend wirkenden Vergussmasse (25) vergossen ist.

11. Transportfahrzeugmulde (10) nach einem der vorhergehenden Ansprüche, **dadurch gekennzeichnet, dass** um die Ummantelung (31) der Halterung (30) zur Befestigung der Temperaturmessvorrichtung an der Muldeninnenwand (11) eine Montageummantelung (32) angeordnet ist, wobei die Montageummantelung (32) in Richtung zur Muldenaußenwand (12) offen ist.

12. Transportfahrzeugmulde (10) nach Anspruch 11, **dadurch gekennzeichnet, dass** die Ummantelung (31) der Halterung (30) ein Außengewinde und die Montageummantelung (32) ein Innengewinde aufweisen, und die beiden Ummantelungen (31, 32) im montierten Zustand miteinander verschraubt sind.

13. Transportfahrzeugmulde (10) nach Anspruch 11 oder 12, **dadurch gekennzeichnet, dass** die Temperaturmessvorrichtung mittels der Montageummantelung (32) an der Transportfahrzeugmulde (10) (10) befestigt ist.

14. Transportfahrzeugmulde (10) nach einem der vorhergehenden Ansprüche, **dadurch gekennzeichnet, dass** der freiliegende Bereich (30a) der Halterung (30) eine runde, rechteckige oder quadratische Form aufweist.

15. Transportfahrzeugmulde (10) nach einem der vorhergehenden Ansprüche, **dadurch gekennzeichnet, dass** die Halterung (30) aus Aluminium, einer Aluminiumlegierung oder Stahl besteht.

16. Transportfahrzeugmulde (10) nach einem der vorhergehenden Ansprüche, **dadurch gekennzeichnet, dass** die Ummantelung (31) der Halterung (30) aus Kunststoff besteht.

17. Transportfahrzeugmulde (10) nach einem der vorhergehenden Ansprüche, **dadurch gekennzeichnet, dass** der Temperatursensor (20) in die Halterung (30) eingeschraubt, eingeklebt, eingepresst oder eingeklemmt ist.

## Claims

1. Transport vehicle skip (10) for transporting building material (50), comprising:
a temperature measuring device comprising a temperature sensor (20), arranged within a holder (30), for determining the temperature of a building material (50) located within the transport vehicle skip (10) of a transport vehicle, the transport vehicle skip (10) comprising an inner wall (11) and an outer wall (12), and the holder (30) being arranged on that side (11a) of the inner skip wall (11) which faces the outer skip wall (12),
wherein
the holder (30) is arranged within a recess (15) within the inner skip wall (11) such that it is thermally insulated from the inner skip wall (11), and
the holder (30) is arranged within the recess (15) such that a region (30a), which faces the interior of the transport vehicle skip (10), of the holder (30) is exposed.

2. Transport vehicle skip (10) as claimed in claim 1, **characterized in that** the holder (30) is arranged within the recess (15) such that the exposed region (30a) of the holder (30) is in direct thermal contact with the building material (50) when the transport vehicle skip (10) (10) is filled.

3. Transport vehicle skip (10) as claimed in claim 1 or 2, **characterized in that** the holder (30) comprises a cladding (31) which is arranged between the inner skip wall (11) and the holder (30) and which thermally insulates the holder (30) and the temperature sensor (20) from the inner skip wall (11).

4. Transport vehicle skip (10) as claimed in any of the previous claims, **characterized in that** the cladding (31) corresponds with the holder (30).

5. Transport vehicle skip (10) as claimed in any of the previous claims, **characterized in that** the holder (30) is arranged essentially flush with the inner surface (11b) of the inner skip wall (11).

6. Transport vehicle skip (10) as claimed in any of the previous claims, **characterized in that** the cladding (31) is U-shaped in its cross section.

7. Transport vehicle skip (10) as claimed in claim 6, **characterized in that** the cladding (31) comprises, on the side (31a) which faces the outer skip wall (12), a closure (40) by means of which the cladding (31) for fastening the temperature sensor (20) can be opened.

8. Transport vehicle skip (10) as claimed in claim 7, **characterized in that** the closure (40) comprises an external thread and the cladding (31) comprises an internal thread in the region of the surface that is in contact with the closure (40), and that the closure (40) and the cladding (31) are screwed together in the assembled state.

9. Transport vehicle skip (10) as claimed in any of the previous claims, **characterized in that** the temperature measuring device comprises, on the side (31a) facing the outer skip wall (12), a cable bushing (41) through which a connecting cable (21) for an electrical connection of the temperature sensor (20) is routed.

10. Transport vehicle skip (10) as claimed in any of previous claims, **characterized in that** the temperature sensor (20) is cast, in the region of the electrical connection, by means of a casting compound (25) which has a thermally and electrically insulating effect.

11. Transport vehicle skip (10) as claimed in any of the previous claims, **characterized in that** an assembly cladding (32) is arranged around the cladding (31) of the holder (30) for fastening the temperature measuring device to the inner skip wall (11), the assembly cladding (32) being open toward the outer skip wall (12).

12. Transport vehicle skip (10) as claimed in claim 11, **characterized in that** the cladding (31) of the holder (30) comprises an external thread and the assembly cladding (32) comprises an internal thread, and that the two claddings (31, 32) are screwed together in the assembled state.

13. Transport vehicle skip (10) as claimed in claim 11 or 12, **characterized in that** the temperature measuring device is fastened to the transport vehicle skip (10) (10) by means of the assembly cladding (32).

14. Transport vehicle skip (10) as claimed in any of the previous claims, **characterized in that** the exposed region (30a) of the holder (30) comprises a circular, rectangular, or square shape.

15. Transport vehicle skip (10) as claimed in any of the previous claims, **characterized in that** the holder (30) consists of aluminum, an aluminum alloy, or steel.

16. Transport vehicle skip (10) as claimed in any of the previous claims, **characterized in that** the cladding (31) of the holder (30) consists of plastic.

17. Transport vehicle skip (10) as claimed in any of the previous claims, **characterized in that** the temperature sensor (20) is screwed, glued, pressed, or clamped into the holder (30).

## Revendications

1. Benne de véhicule de transport (10) pour le transport de matériaux de construction (50), avec:
un dispositif de mesure de température, avec un capteur de température (20) disposé dans un support (30), destiné à déterminer la température d'un matériau de construction (50) situé à l'intérieur de la benne de véhicule de transport (10), où la benne de véhicule de transport (10) présente une paroi intérieure (11) et une paroi extérieure (12) et le support (30) étant disposé du côté (11a) de la paroi de benne intérieure (11) qui est orienté vers la paroi de benne extérieure (12),
dans laquelle le support (30) est disposé, de telle manière qu'il soit isolé thermiquement par rapport à la paroi de benne intérieure (11), dans un évidement (15) dans la paroi de benne intérieure (11), et
le support (30) est disposé dans l'évidement (15) de sorte que soit exposée une zone (30a) du support (30) orientée vers l'intérieur de la benne de véhicule de transport (10).

2. Benne de véhicule de transport (10) selon la revendication 1, **caractérisée par le fait que** le support (30) est disposé dans l'évidement (15) de sorte que la zone exposée (30a) du support (30) se trouve, à benne de véhicule de transport (10) (10) remplie, en contact thermique direct avec le matériau de construction (50).

3. Benne de véhicule de transport (10) selon la revendication 1 ou 2, **caractérisée par le fait que** le support (30) présente une enveloppe (31) qui est disposée entre la paroi de benne intérieure (11) et le support (30) et qui isole thermiquement le support (30) et le capteur de température (20) par rapport à la paroi de benne intérieure (11).

4. Benne de véhicule de transport (10) selon l'une des revendications précédentes, **caractérisée par le fait que** l'enveloppe (31) correspond au support (30).

5. Benne de véhicule de transport (10) selon l'une des revendications précédentes, **caractérisée par le fait que** le support (30) est disposé sensiblement à fleur avec la surface intérieure (11b) de la paroi de benne intérieure (11).

6. Benne de véhicule de transport (10) selon l'une des revendications précédentes, **caractérisée par le fait que** l'enveloppe (31) est de section en forme de "U".

7. Benne de véhicule de transport (10) selon la revendication 6, **caractérisée par le fait que** l'enveloppe (31) présente, du côté (31a) orienté vers la paroi de benne extérieure (12), un obturateur (40) au moyen duquel l'enveloppe (31) peut être ouverte pour la fixation du capteur de température (20).

8. Benne de véhicule de transport (10) selon la revendication 7, **caractérisée par le fait que** l'obturateur (40) présente un filet extérieur et que l'enveloppe (31) présente, dans la zone de la face se trouvant en contact avec l'obturateur (40), un filet intérieur, et que l'obturateur (40) et l'enveloppe (31) sont, à l'état monté, vissés l'un à l'autre.

9. Benne de véhicule de transport (10) selon l'une des revendications précédentes, **caractérisée par le fait que** le dispositif de mesure de température présente, du côté (31a) orienté vers la paroi de benne extérieure (12), un passage de câble (41) à travers lequel est guidé un câble de raccordement (21) pour une connexion électrique du capteur de température (20).

10. Benne de véhicule de transport (10) selon l'une des revendications précédentes, **caractérisée par le fait que** le capteur de température (20) est scellé, à l'endroit de la connexion électrique, au moyen d'une masse de scellement (25) agissant de manière thermique et isolante électriquement.

11. Benne de véhicule de transport (10) selon l'une des revendications précédentes, **caractérisée par le fait qu'**autour de l'enveloppe (31) du support (30) est disposée, pour la fixation du dispositif de mesure de température à la paroi de benne intérieure (11), une enveloppe de montage (32), l'enveloppe de montage (32) étant ouverte en direction de la paroi de benne extérieure (12).

12. Benne de véhicule de transport (10) selon la revendication 11, **caractérisée par le fait que** l'enveloppe (31) du support (30) présente un filet extérieur et que l'enveloppe de montage (32) présente un filet intérieur, et que les deux enveloppes (31, 32) sont, à l'état monté, vissées l'une à l'autre.

13. Benne de véhicule de transport (10) selon la revendication 11 ou 12, **caractérisée par le fait que** le dispositif de mesure de température est fixé à la benne de véhicule de transport (10) (10) au moyen de l'enveloppe de montage (32).

14. Benne de véhicule de transport (10) selon l'une des revendications précédentes, **caractérisée par le fait que** la zone exposée (30a) du support (30) présente une forme ronde, rectangulaire ou carrée.

15. Benne de véhicule de transport (10) selon l'une des revendications précédentes, **caractérisée par le fait que** le support (30) est réalisé en aluminium, un alliage d'aluminium ou en acier.

16. Benne de véhicule de transport (10) selon l'une des revendications précédentes, **caractérisée par le fait que** l'enveloppe (31) du support (30) est réalisée en matière plastique.

17. Benne de véhicule de transport (10) selon l'une des revendications précédentes, **caractérisée par le fait que** le capteur de température (20) est vissé, collé, pressé ou serré dans le support (30).
